# EUROPÄISCHE PATENTSCHRIFT

(11) **EP 1 825 156 B1**
(45) Veröffentlichungstag und Bekanntmachung des Hinweises auf die Patenterteilung: **30.12.2009**
(21) Anmeldenummer: 05802398.7
(22) Anmeldetag: 10.11.2005
(51) Int. Cl.: F16C 29/06

(54) **WÄLZLAGER FÜR LINEARBEWEGUNGEN**
ROLLER BEARING FOR LINEAR MOVEMENTS
PALIER A ROULEMENT POUR DEPLACEMENTS LINEAIRES

(30) Priorität: 09.12.2004 DE 102004059275
(43) Veröffentlichungstag der Anmeldung: 29.08.2007
(73) Patentinhaber: Schaeffler KG, 91074 Herzogenaurach (DE)
(72) Erfinder: WINKLER, Thomas, 66280 Sulzbach (DE)
(86) Internationale Anmeldenummer: PCT/EP2005/012026
(87) Internationale Veröffentlichungsnummer: WO 2006/061076

(56) Entgegenhaltungen:
- DE-A1- 19 841 668
- US-A- 5 059 037
- US-A- 5 431 498
- US-A- 5 800 065

## Beschreibung

Die Erfindung betrifft ein Wälzlager für Linearbewegungen, mit einem auf einer Führungsschiene in deren Längsrichtung verschiebbar geführten, im Querschnitt im wesentlichen C-förmigen Führungswagen mit zwei Seitenschenkeln, dessen Tragkörper im Bereich jedes Seitenschenkels über mindestens einen Umlauf von Wälzkörpern an der Führungsschiene verfahrbar abgestützt ist, wobei der Wälzkörperumlauf jeweils eine lastübertragende Wälzkörperreihe aufweist, die sich im Eingriff mit einer lastaufnehmenden Laufbahn des Tragkörpers und einer lastaufnehmenden Laufbahn der Führungsschiene befindet, sowie eine rücklaufende Wälzkörperreihe und zwei Umlenk-Wälzkörperreihen aufweist, wobei zur Bildung der lastaufnehmenden Laufbahn des Tragkörpers ein zur Längsrichtung der Führungsschiene paralleles Laufbahnelement vorgesehen ist. Dabei ist das Laufbahnelement als gehärtetes Blechelement ausgeführt, welches in einem Aufnahmebereich an dem jeweiligen Seitenschenkel des Tragkörpers angesetzt und befestigt ist.

### Hintergrund der Erfindung

Zur Herstellung eines Wälzlagers für Linearbewegungen ist es unbedingt notwendig, die Laufbahnen dieses Lagers mit einer hinreichenden Härte auszuführen, damit eine entsprechende Lebensdauer erreicht werden kann. In der Regel geschieht dies durch eine Wärmebehandlung, beispielsweise durch Einsatzhärten, Induktionshärten oder auch Durchhärten. Diese Vorgehensweise hat jedoch den Nachteil, dass ein zusätzlicher, separater Arbeitsgang zwischen der Weichbearbeitung und der Hartbearbeitung erforderlich ist und nur härtbare Werkstoffe verwendet werden können. Außerdem kann ein Härteverzug auftreten, der insbesondere die Position der Rücklaufbohrungen des Führungswagens beeinflusst.

Aus der Druckschrift DE 93 13 728 U1 ist eine Linearwälzlageranordnung mit integrierten Laufbahnelementen der eingangs genannten Art bekannt. Diese hat aber den Nachteil, dass die Laufbahnelemente des Führungswagens, wie sich aus der Querschnittsdarstellung ergibt, nicht aus Blech herstellbar sind und dass auch der Aufnahmebereich des Tragkörpers insofern nachteilig ausgeführt ist, als er im Querschnitt ein nach außen gerichtetes Prisma bildet, was den Tragkörper hinsichtlich seiner Steifigkeit sehr stark schwächt.

### Zusammenfassung der Erfindung

Der Erfindung liegt die Aufgabe zugrunde, das Wälzlager für Linearbewegungen so weiter zu bilden, dass sein Tragkörper im Vergleich zum vorbekannten Stand der Technik weit weniger geschwächt ist. Dabei soll ein separater Arbeitsgang des Härtens entfallen können. Ebenso soll die Verwendung von nicht härtbaren Werkstoffen möglich sein.

Diese Aufgabe wird erfindungsgemäß dadurch gelöst, dass jeder Aufnahmebereich des Tragkörpers im Querschnitt prismenartig ausgeführt und dachförmig zu der Führungsschiene hin nach innen gerichtet ist.

Hierdurch sind hohe Kosteneinsparungen möglich. Es bietet sich auch die Möglichkeit, Leichtbau-Werkstoffe zu verwenden. Als Einsatzgebiet einer solchen Linearführung kommen der allgemeine Maschinenbau und der Handlingbereich in Betracht, unter anderem auch Anwendungen, bei denen die Genauigkeitsanforderungen weniger von Bedeutung sind.

Zur Herstellung dieses Linearwälzlagers bietet es sich an, nicht mehr den Tragkörper komplett zu härten, sondern die gehärteten Blechelemente jeweils in einen definierten Aufnahmebereich des Tragkörpers einzulegen. Die Blechelemente können separat durch eine hochgenaue Blechumformung hergestellt, gehärtet und anschließend gesäubert werden. Eine Schleifbearbeitung kann entfallen, so dass die Herstellung der Blechelemente insgesamt rationell und kostengünstig ist.

Der Tragkörper wird ausschließlich im weichen Zustand bearbeitet. Seine prismenartigen Aufnahmebereiche müssen feinbearbeitet werden, um hinreichend genaue Aufnahmemaße für die Blechelemente zu bieten.

### Kurze Beschreibung der Zeichnung

Ausführungsbeispiele der Erfindung sind in der Zeichnung dargestellt und werden im folgenden näher beschrieben.

Es zeigen:
- Figur 1: eine Führungsschiene und einen daran über Wälzkörper abge- stützten Tragkörper eines erfindungsgemäßen Linear-Wälzlagers in stirnseitiger Ansicht;
- Figur 2: den rechtsseitigen Abstützbereich in gegenüber Figur 1 vergrö- ßerter Darstellung;
- Figur 3: das in Figur 2 dargestellte Blechelement in stirnseitiger Ansicht;
- Figur 4: das Blechelement in einer Längsseitenansicht;
- Figur 5: ein aus dem Blechelement und einem umspritzten Kunststoff- element bestehendes einstückiges Bauteil in einem Querschnitt, dessen Schnittebene durch eine Bohrung des Blechelementes hindurch verläuft;
- Figur 6: das Bauteil gemäß Figur 5 in einer Darstellung mit aus der Boh- rung heraus parallel verschobener Querschnittsebene;
- Figur 7: eine der Figur 2 entsprechende Darstellung mit einem abgewan- delten Blechelement;
- Figur 8: das abgewandelte Blechelement gemäß Figur 7.

### Ausführliche Beschreibung der Zeichnung

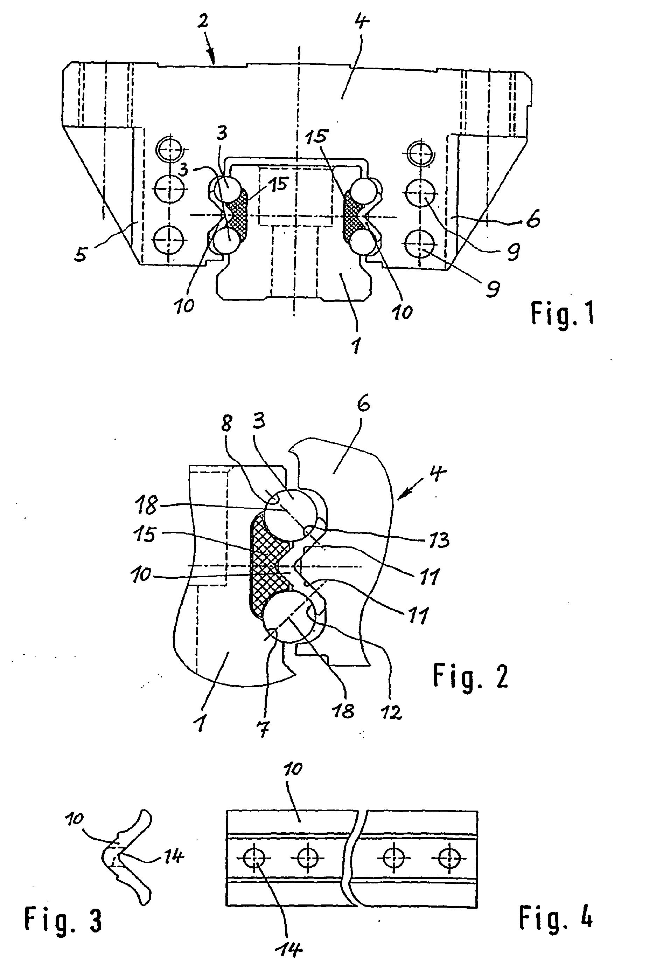

Ein in den Figuren 1 bis 6 dargestelltes Wälzlager für Linearbewegungen besteht aus einer Führungsschiene 1, an welcher ein Führungswagen 2 längsverschieblich abgestützt ist. Die Abstützung ist mit Umläufen von Wälzkörpern 3 durchgeführt, welche im Ausführungsbeispiel Kugeln sind. Der Führungswagen 2 enthält einen Tragkörper 4, welcher im Querschnitt bzw. in stirnseitiger Ansicht etwa C-förmig ausgebildet ist und die Führungsschiene 1 teilweise umgibt, wobei zwei Seitenschenkel 5 und 6 des Tragkörpers 4 des Führungswagens 2 den seitlichen Längsseiten der Führungsschiene 1 benachbart sind.

An jedem der Seitenschenkel 5 und 6 befinden sich zwei endlose Umläufe von Wälzkörpern 3. Sie sind, wie aus Figur 1 erkennbar ist, jeweils übereinander angeordnet. Davon stützen sich die Wälzkörper 3 jeweils einer lastübertragenden Wälzkörperreihe an einer unteren lastaufnehmenden Laufbahn 7 bzw. an einer oberen lastaufnehmenden Laufbahn 8 der Führungsschiene 1 ab. Jede lastaufnehmende Laufbahn 7 bzw. 8 ist über zwei nicht dargestellte Umlenk-Wälzkörperreihen mit einer rücklaufenden Wälzkörperreihe verbunden, so dass sich endlose Wälzkörperumlaufe ergeben. Zur Aufnahme der rücklaufenden Wälzkörperreihen sind in dem Tragkörper 4 Rücklaufkanäle 9 vorgesehen.

Für die Abstützung der Wälzkörper 3 der lastübertragenden Wälzkörperreihen an dem Tragkörper sind erfindungsgemäß gehärtete Blechelemente 10 vorgesehen, welche in Aufnahmebereichen 11 des Seitenschenkels 5 bzw. 6 des Tragkörpers 4 angesetzt und dort befestigt sind. Die Aufnahmebereiche 11 sind prismenförmig gestaltet und bilden jeweils eine Dachform, welche auf die Führungsschiene 1 gerichtet ist. An seiner von dem Aufnahmebereich 11 abgewandten und der Führungsschiene 1 zugewandten Seite weist jedes Blechelement 10 eine untere lastaufnehmende Laufbahn 12 und eine obere lastaufnehmende Laufbahn 13 des Tragkörpers 4 für die Wälzkörper 3 der lastübertragenden Wälzkörperreihen auf. Zur Wälzkörperrückhalterung an dem Führungswagen 2 weist jedes Blechelement 10 Bohrungen 14 auf und ist mit einem die Bohrungen 14 ausfüllenden Kunststoffelement 15 umspritzt.

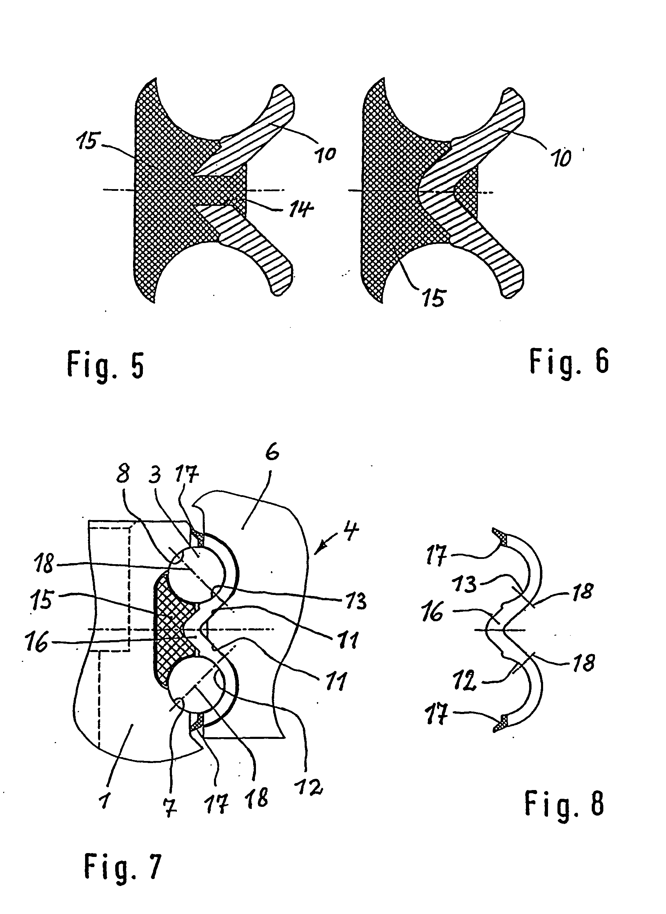

In den Figuren 7 und 8 weist das erfindungsgemäße Wälzlager für Linearbewegungen ein abgewandeltes Blechelement 16 auf, an welchem zwei Längsdichtungsleisten 17 befestigt sind. Diese liegen an der benachbarten Längsseite der Führungsschiene 1 an und verschließen den Raum, in welchem sich die Wälzkörper 3 befinden, nach außen.

Das Element zur Wälzkörperrückhalterung 15 aus Kunststoff erstreckt sich über die gesamte Länge der Laufbahnen 12 und 13 des Tragkörpers 4. Es ist formschlüssig mit dem Blechelement 10 bzw. 16 verbunden, indem das Blechelement während des Umformprozesses zu seiner Herstellung mit den Bohrungen 14 zwischen den Laufbahnen 12 und 13 versehen wird. Durch die Umspritzung mit dem Kunststoff ist das Blechelement 10 bzw. 16 mit der Wälzkörperrückhalterung einstückig verbunden. Dies führt zu einer Vereinfachung des Montageprozesses und somit zur Kosteneinsparung.

Um die Abdichtung des Führungswagens 2 zu verbessern, ist es notwendig, die Längsdichtungsleisten 17 vorzusehen. Diese können aus Gummi bestehen und erstrecken sich über die gesamte Länge des Führungswagens 2. Sie sind möglichst nahe jeweils über der oberen Laufbahn und der unteren Laufbahn angeordnet. Das beschriebene Blechelement ist in den Figuren 7 und 8 dadurch zu dem Blechelement 16 abgewandelt, dass die Laufbahnbereiche 12 und 13 in radialer Richtung um die Wälzkörper 3 herumgezogen sind, so dass man einen Bereich erhält, an dem jeweils eine Längsdichtungsleiste 17 angebracht werden kann. Der Radius der 180°-Umschlingung an dem Blechelement 16 ist so gewählt, dass der Wälzkörper nur an einem Punkt in Richtung der Lastübertragungsebene 18 an dem Laufbahnbereich 12 bzw. 13 Kontakt hat und ansonsten freigestellt ist. Es wird vorgeschlagen, die aus Gummi bestehende Längsdichtungsleiste 17 an dem Blechelement 16 anzuvulkanisieren. Somit ist ein fester Verbund möglich und eine Einstückigkeit der gewählten Komponenten gegeben. Auch dieses führt zu Kosteneinsparungen bezüglich der Montage und zur Wirksamkeitsverbesserung der Längsabdichtungen.

### Bezugszeichen

- 1: Führungsschiene
- 2: Führungswagen
- 3: Wälzkörper
- 4: Tragkörper
- 5: Seitenschenkel
- 6: Seitenschenkel
- 7: untere lastaufnehmende Laufbahn der Führungsschiene
- 8: obere lastaufnehmende Laufbahn der Führungsschiene
- 9: Rücklaufkanal
- 10: Blechelement
- 11: Aufnahmebereich
- 12: untere lastaufnehmende Laufbahn des Tragkörpers
- 13: obere lastaufnehmende Laufbahn des Tragkörpers
- 14: Bohrung
- 15: Kunststoffelement
- 16: Blechelement
- 17: Längsdichtungsleiste
- 18: Lastübertragungsebene

## Patentansprüche

1. Wälzlager für Linearbewegungen, mit einem auf einer Führungsschiene (1) in deren Längsrichtung verschiebbar geführten, im Querschnitt im wesentlichen C-förmigen Führungswagen (2) mit zwei Seitenschenkeln (5,6), dessen Tragkörper (4) im Bereich jedes Seitenschenkels (5,6) über mindestens einen Umlauf von Wälzkörpern (3) an der Führungsschiene (1) verfahrbar abgestützt ist, wobei der Wälzkörperumlauf jeweils eine lastübertragende Wälzkörperreihe aufweist, die sich im Eingriff mit einer lastaufnehmenden Laufbahn (12, 13) des Tragkörpers (4) und einer lastaufnehmenden Laufbahn (7, 8) der Führungsschiene (1) befindet, sowie eine rücklaufende Wälzkörperreihe und zwei Umlenk-Wälzkörperreihen aufweist, wobei zur Bildung der lastaufnehmenden Laufbahn (12, 13) des Tragkörpers (4) ein zur Längsrichtung der Führungsschiene (1) paralleles Laufbahnelement vorgesehen ist, wobei das Laufbahnelement als gehärtetes Blechelement (10, 16) ausgeführt ist, welches in einem Aufnahmebereich (11) an dem jeweiligen Seitenschenkel (5,6) des Tragkörpers (4) angesetzt und befestigt ist, **dadurch gekennzeichnet, dass** jeder Aufnahmebereich (11) des Tragkörpers (4) im Querschnitt prismenartig ausgeführt und dachförmig zu der Führungsschiene (1) hin nach innen gerichtet ist.

2. Wälzlager nach Anspruch 1, **dadurch gekennzeichnet, dass** das Blechelement (10, 16) Bohrungen (14) aufweist und mit einem die Bohrungen (14) ausfüllenden Kunststoffelement (15) zur Wälzkörperrückhalterung umspritzt ist.

3. Wälzlager nach Anspruch 1, **dadurch gekennzeichnet, dass** an dem Tragkörper (4) des Führungswagens (1) flexible Längsdichtungsleisten (17) angebracht sind, welche jeweils an einem Blechelement (16) befestigt und an der benachbarten Längsseite der Führungsschiene (1) anliegend angeordnet sind.

## Claims

1. Roller bearing for linear movements, comprising a guiding carriage (2) which is displaceably guided on a guiding rail (1) in the longitudinal direction thereof, is essentially C-shaped in cross section and has two side limbs (5, 6), and whose carrying element (4) is displaceably supported in the region of each side limb (5, 6) on the guide rail (1) by means of at least one series of rolling bodies (3), the series of rolling bodies having in each case a load transmitting row of rolling bodies which is in engagement with a load receiving raceway (12, 13) of the supporting body (4) and a load receiving raceway (7, 8) of the guide rail (1), as well as having a row of return-movement rolling bodies and two rows of deflecting rolling bodies, in which case in order to form the load receiving raceway (12, 13) of the supporting body (4) a raceway element which is parallel to the longitudinal direction of the guide rail (1) is provided, the raceway element being embodied as a hardened sheet metal element (10, 16) which is fitted and secured in a receptacle area (11) on the respective side limb (5, 6) of the supporting body (4), **characterized in that** each receptacle area (11) of the supporting body (4) is constructed in the manner of a prism in cross section and is directed toward the inside in a roof shape with respect to the guide rail (1).

2. Roller bearing according to Claim 1, **characterized in that** the sheet metal element (10, 16) has bores (14) and is encapsulated by injection molding with a plastic element (15) which fills in the bores (14) and has the purpose of retaining the rolling body.

3. Rolling body according to Claim 1, **characterized in that** flexible longitudinal sealing strips (17) which are each secured to a sheet metal element (16) and are arranged so as to bear against the adjacent longitudinal side of the guide rail (1) are provided on the supporting body (4) of the guiding carriage (2).

## Revendications

1. Palier à roulement pour déplacements linéaires, comprenant un chariot de guidage (2) de section transversale essentiellement en forme de C, guidé de manière déplaçable dans sa direction longitudinale sur un rail de guidage (1), avec deux branches latérales (5, 6), dont le corps porteur (4) est supporté de manière déplaçable dans la région de chaque branche latérale (5, 6) par le biais d'au moins une circulation de corps de roulement (3) sur le rail de guidage (1), la circulation de corps de roulement présentant à chaque fois une rangée de corps de roulement transmettant les charges, qui se trouve en prise avec une piste de roulement (12, 13) du corps porteur (4) recevant les charges et avec une piste de roulement (7, 8) du rail de guidage (1) recevant les charges, et présentant aussi une rangée de corps de roulement de retour et deux rangées de corps de roulement de déflection, et pour la formation de la piste de roulement (12, 13) du corps porteur (4) recevant les charges, un élément de piste de roulement parallèle à la direction longitudinale du rail de guidage (1) étant prévu, l'élément de piste de roulement étant réalisé sous forme d'élément en tôle trempée (10, 16), qui est placé et fixé dans une région de réception (11) sur la branche latérale respective (5, 6) du corps porteur (4), **caractérisé en ce que** chaque région de réception (11) du corps porteur (4) est réalisée avec une section transversale en forme de prisme et est orientée en forme de toit vers l'intérieur vers le rail de guidage (1).

2. Palier à roulement selon la revendication 1, **caractérisé en ce que** l'élément en tôle (10, 16) présente des alésages (14) et est couvert par pulvérisation avec un élément en plastique (15) remplissant les alésages (14) pour retenir les corps de roulement.

3. Palier à roulement selon la revendication 1, **caractérisé en ce que** des nervures d'étanchéité longitudinales flexibles (17) sont montées sur le corps porteur (4) du chariot de guidage (1), lesquelles sont fixées à chaque fois à un élément en tôle (16) et sont disposées de manière à s'appliquer contre le côté longitudinal adjacent du rail de guidage (1).
